Europäisches Patentamt

European Patent Office

Office européen des brevets

(19)

(11) Veröffentlichungsnummer: **0 371 374**
**A1**

# (12) EUROPÄISCHE PATENTANMELDUNG

(21) Anmeldenummer: 89121500.6

(22) Anmeldetag: 21.11.89

(51) Int. Cl.5: **H01B 3/22, G02B 6/44, C08K 3/36**

(30) Priorität: 24.11.88 DE 3839596

(43) Veröffentlichungstag der Anmeldung:
06.06.90 Patentblatt 90/23

(84) Benannte Vertragsstaaten:
AT BE CH DE ES FR GB GR IT LI NL SE

(71) Anmelder: H.B. Fuller GmbH
An der Roten Bleiche 2-3
D-2120 Lüneburg(DE)

(72) Erfinder: Poppe, Wilfried
Stiepelserstrasse 18
D-3124 Bleckede/Alt Garge(DE)
Erfinder: Lubczyk, Frank
Dorfstrasse 3
D-2121 Wendisch Evern(DE)

(74) Vertreter: UEXKÜLL & STOLBERG
Patentanwälte
Beselerstrasse 4
D-2000 Hamburg 52(DE)

(54) Thixotropes Gel und dessen Verwendung als Füllmasse für Lichtwellenleiterkabel.

(57) Es wird ein thixotropes Gel auf Basis von einem synthetischen Kohlenwasserstofföl und einem hydrophoben Thixotropiermittel beschrieben. Das synthetische Kohlenwasserstofföl besteht aus einem hydrierten Polyalkylen, das ein Polymeres von 1-Octen, 1-Nonen- 1-Decen, 1-Undecen und/oder 1-Dodecen oder einer Mischung dieser Polymere. Das Gel eignet sich besonders gut zur Verwendung als Füllmasse bei der Herstellung von Lichtwellenleiterkabeln.

EP 0 371 374 A1

EP 0 371 374 A1

# Thixotropes Gel und dessen Verwendung als Füllmasse für Lichtwellenleiterkabel

Die Erfindung betrifft ein thixotropes Gel, das aus einem synthetischen Kohlenwasserstofföl, Thixotropiermittel sowie gegebenenfalls organischem Verdickungsmittel, Mineralöl und weiteren Zusatzstoffen besteht. Die Erfindung betrifft auch die Verwendung eines solchen thixotropen Gels als Adernfüllmasse oder Seelenfüllmasse für Lichtwellenleiterkabel.

Thixotrope Gele und ihr Einsatz als Füllmaterial in Lichtwellenleiterkabeln sind bekannt.

In der DE-OS 27 28 642 ist ein längswasserdichtes Lichtwellenleiterkabel mit loser Hülle beschrieben, bei dem in die lose Hülle eine zähflüssige, im Kabel nicht mehr fließende oder tropfende Substanz eingebracht ist. Als Füllmaterial wird ein schwach vernetztes Silikonharz, ein Polyesterharz, ein thermoplastischer Polyurethankautschuk oder ein angequollenes Polystyrol in Öl verwendet.

In der EP-PS 0 029 198 ist ein Lichtwellenleiterkabel beschrieben, bei dem mindestens ein faserförmiger Lichtwellenleiter im Innern einer Schutzhülle angeordnet ist und der verbleibende Innenraum mit einer gelartigen Substanz ausgefüllt ist. Die gelartige Substanz besteht aus einem Gemisch aus einem Öl und einem Thixotropierungsmittel. Sie enthält zusätzlich ein organisches Verdickungsmittel, das ganz oder teilweise aus halogenierten und/ oder halogenfreien Kohlenwasserstoffpolymeren besteht. Als Öl werden aromatische oder aliphatische Kohlenwasserstofföle, Paraffinöl, Silikonöl und halogeniertes, insbesondere chloriertes Biphenylen verwendet.

In der US-PS 4 701 016 ist ein Füllmaterial für Lichtwellenleiterkabel beschrieben, das aus einem Öl oder einer Mischung von Ölen, kolloidalen Teilchen und gegebenenfalls organischen Verdickungsmitteln besteht. Als Öle werden Paraffinöl, naphthenisches Öl, Polybutenöl, pflanzliches Öl auf Triglyceridbasis, Polypropylenöl, chloriertes Paraffinöl und Polyester verwendet. Die kolloidalen Teilchen bestehen aus hydrophobierter pyrogener Kieselsäure, gefällter Kieselsäure und Ton.

Die Füllmasse im Lichtwellenleiterkabel soll sicherstellen, daß nach Möglichkeit keine Zug- oder Druckkräfte auf die empfindliche Lichtleitfaser ausgeübt werden, weil deren Dämpfung unter mechanischer Beanspruchung in unerwünschter Weise ansteigt. Aus diesem Grunde werden als Füllmasse vorzugsweise thixotrope Gele verwendet, die im Ruhezustand nicht fließen, sich aber bei mechanischer Beanspruchung vorrübergehend verflüssigen, so daß die Lichtleitfaser von der äußeren Einwirkung entkoppelt ist.

Weiterhin dient die Füllmasse dazu, das Eindringen von Wasser in den Zwischenraum zwischen Lichtleitfaser und Kabelhülle zu verhindern. Die Füllmasse muß schließlich mit dem als Schutzüberzug auf den Lichtleitfasern verwendeten Beschichtungen sowie der Adernschutzhülle und gegebenenfalls auch der äußeren Kabelumhüllung verträglich sein.

Füllmassen auf Basis von Silikonöl haben den Nachteil, daß das Silikonöl aufgrund seiner Kriechfähigkeit mit der Zeit die Kabelverbindungselemente und elektronischen Bauteile überzieht, was zu Störungen führen kann. Aus diesem Grunde werden Füllmassen, die Silikonöl enthalten, heute praktisch nicht mehr verwendet.

Füllmassen, die halogenierte Kohlenwasserstoffe enthalten, haben den Nachteil, daß sich der Halogengehalt korrodierend auswirken kann.

Aus diesen Gründen werden für die Herstellung von Lichtleiterkabeln Gele auf Basis von Kohlenwasserstoffen bevorzugt. Die bekannten Gele auf Basis von Kohlenwasserstoffen sind jedoch in verschiedener Hinsicht nicht befriedigend.

Gele auf Basis von Paraffinöl haben den Nachteil, daß das Paraffin bei tiefen Temperaturen, beispielsweise im Winter, kristallisiert. Die Kristallbildung führt zu unerwünschter mechanischer Beanspruchung der Lichtleitfaser. Viele der bekannten Gele auf Basis von Kohlenwasserstoffen und insbesondere diejenigen Produkte, die zur Verarbeitung bei höherer Temperatur geeignet sind, verlieren bei niedrigen Temperaturen ihre thixotropen Eigenschaften. Unterhalb des Fließpunktes (pour point) der flüssigen Phase führen diese Gele in Lichtleiterkabeln zu einer wesentlichen Verschlechterung des Dämpfungsverhaltens. Daher ist beispielsweise ein Gel auf Basis eines Weißöls mit einem Fließpunkt von -25° C, wie es in der US-PS 4 701 016 beschrieben ist, zum Einsatz in Regionen mit strengen Wintern nicht geeignet.

Es wurde auch versucht, Gele auf Basis von Kohlenwasserstoffen mit niedrigerem Fließpunkt als Füllmaterial für Lichtleiterkabel einzusetzen. Diese Gele sind jedoch problematisch hinsichtlich ihrer Verarbeitung. Üblicherweise werden bei der Herstellung einer Lichtwellenleiterader bzw. eines -kabels die Füllmasse und die Kunststoffumhüllung koextrudiert. Am Extruder ist die Füllmasse einer erhöhten Temperatur von beispielsweise 200° C ausgesetzt. Diese Verarbeitungstemperatur liegt oberhalb des Flammpunktes des synthetischen Polybutenöls mit einem Fließpunkt von -35° C, das gemäß der US-PS 4 701 016 eingesetzt wird. Als weiterer Nachteil kommt hinzu, daß die bekannten Gele auf Basis von Kohlenwasserstoffen mit niedrigem Fließpunkt bei der erhöhten Verarbeitungstemperatur einen unerwünscht hohen

2

Dampfdruck aufweisen.

Aufgabe der Erfindung ist es, ein thixotropes Gel der eingangs genannten Art dahingehend zu verbessern, daß die vorstehend beschriebenen Nachteile überwunden werden. Einerseits soll das Gel als Füllmasse für Lichtwellenleiterkabel auch in Regionen mit kalten Wintern geeignet sein. Andererseits soll es sich bei erhöhter Temperatur problemlos verarbeiten lassen.

Die Aufgabe wird durch ein thixotropes Gel der eingangs genannten Art gelöst, bei dem das synthetische Kohlenwasserstofföl aus einem hydrierten Polyalkylen besteht, das ein Polymeres von 1-Octen, 1-Nonen, 1-Decen, 1-Undecen und/oder 1-Dodecen oder eine Mischung derartiger Polymere ist. Bevorzugte Ausführungsformen der Erfindung ergeben sich aus den Unteransprüchen.

Die erfindungsgemäßen Gele sind überraschend gut für die Herstellung von Lichtwellenleiterkabeln geeignet. Sie verhalten sich neutral gegenüber den übrigen Lichtwellenleiterkabeln verwendeten Konstruktionswerkstoffen. Sie weisen eine gute Oxydationsstabilität auf. Sie lassen sich gut bei erhöhter Temperatur verarbeiten. Ihre thixotropen Eigenschaften bleiben bis herab zu Temperaturen unterhalb von -50°C erhalten. Da die erfindungsgemäßen Gele im wesentlichen nur hydrophobe Materialien enthalten, verhindern sie das Eindringen von Wasser in ein mit ihnen gefülltes Lichtwellenleiterkabel.

Die erfindungsgemäß eingesetzten synthetischen Kohlenwasserstofföle weisen eine spezielle, besonders stark verzweigte Struktur auf. Aufgrund der Verzweigung zeigen diese Öle eine geringe Temperaturabhängigkeit der Viskosität. Die Länge der Verzweigung hat auch einen wesentlichen Einfluß auf den Fließpunkt (pour point), der im allgemeinen unterhalb von -40°C und vorzugsweise unterhalb von -50°C liegt.

Hydrierte Polyalkylene, wie sie erfindungsgemäß zum Einsatz gelangen, sind im Handel erhältlich. Sie werden üblicherweise durch Polymerisation der Monomeren, entweder thermisch oder katalytisch, in Gegenwart eines Di-tert.-alkylperoxids oder eines Friedel-Krafts-Katalysators wie Aluminiumchlorid oder Bortrifluorid hergestellt. Es ist erfindungsgemäß bevorzugt, daß der mittlere Wert der Kettenlänge der Monomeren etwa 10 Kohlenstoffatome beträgt. Besonders bevorzugt sind 1-Decen oder Olefinmischungen, die reich an diesem Olefin sind.

Zweckmäßigerweise hat das erfindungsgemäß eingesetzte synthetische Kohlenwasserstofföl bei Raumtemperatur eine dynamische Viskosität von 5 bis $10^4$ mPa.s. Vorzugsweise beträgt die dynamische Viskosität 200 bis 400 mPa.s. Die kinema tische Viskosität von im Handel erhältlichen gut geeigneten Produkten liegt bei 40°C im Bereich von 10 bis 500 mm²/sec.

Diese verzweigten Kohlenwasserstoffpolymere haben eine gute Scherstabilität. Sie können daher problemlos in hochtourigen Mischern mit den übrigen Bestandteilen zu Gelen verarbeitet werden.

Sie sind mit Mineralölen und vielen natürlichen und synthetischen Polymeren gut mischbar. Daher ist es möglich, die erfindungsgemäße Gele durch Zusatz weiterer Stoffe zu modifizieren.

Ein geeignetes Thixotropiermittel ist pyrogne Kieselsäure. Insbesondere wenn das erfindungsgemäße Gel als Aderfüllmasse in Lichtwellenleiterkabeln eingesetzt werden soll, dann ist hydrophobe pyrogne Kieselsäure das bevorzugte Thixotropiermittel. Bei dieser Kieselsäure ist die Oberfläche mit Silan chemisch modifiziert. Daneben kommt auch hydrophobierte gefällte Kieselsäure in Betracht.

Ein weiteres geeignetes Thixotropiermittel ist hydrophobierter Ton wie beispielsweise Tetraalkylammoniumderivate von Montmorillonit.

Schließlich sind auch Metallseifen wie Aluminiumseifen langkettiger Fettsäuren geeignete Thixotropiermittel.

Im allgemeinen haben die Tixotropiermittel eine Oberfläche nach B.E.T. von etwa 50 bis etwa 400 m²/g.

Um sicherzustellen, daß auch unter extremen Bedingungen für lange Zeit das Öl in der Gelphase fixiert bleibt, ist es zweckmäßig, ein organisches Verdickungsmittel hinzuzufügen. Geeignete Verdickungsmittel sind in der EP-PS 29 198 und der US-PS 4 701 016 beschrieben, deren Offenbarung bezüglich der Verdickungsmittel hiermit zum Gegenstand der vorliegenden Beschreibung gemacht wird. Ein typisches Verdickungsmittel ist ein Kohlenwasserstoffpolymer mit einer Viskosität von $10^3$ bis $10^5$ mPa.s bei 180°C.

Andere geeignete Verdickungsmittel sind thermoplastische Kautschuke, insbesondere Styrol-(Ethylen-Butylen)-Blockcopolymerisate und Styrol-(Ethylen-Propylen)-Blockcopolymerisate. Diese Materialien werden in Mengen von weniger als 10 Gew.%, bezogen auf das Gel, eingesetzt.

Aus Kostengründen kann es erwünscht sein, daß das erfindungsgemäße Gel als weiteren Bestandteil Mineralöl oder ein anderes natürliches oder synthetisches Polymer enthält. Bei Einsatz dieser zusätzlichen Öle werden die erfindungsgemäßen Vorteile unter Umständen nur in vermindertem Ausmaß erzielt. Bei Gelen die als weiteren Bestandteil Mineralöl enthalten, ist es besonders bevorzugt, als Verdickungsmittel thermoplastischen Kautschuk zu verwenden.

Es kann zweckmäßig sein, dem thixotropen Gel ein Antioxydans zuzusetzen.

Weiterhin können dem Gel zur Kennzeichnung Farbstoffe zugefügt werden.

EP 0 371 374 A1

Insbesondere bei Verwendung als Seelenfüllmasse können zusätzlich noch anorganische Füllstoffe, zum Beispiel Kaolin, Kreide oder dergleichen beigemischt werden.

Die folgende Tabelle 1 gibt einen Anhaltspunkt dafür, in welchen Mengen die wesentlichen Bestandteile in dem erfindungsgemäßen Gel enthalten sein können. Die Gehalte in der Tabelle 1 sind in Gewichtsteilen abgegeben.

Tabelle 1

| | | | | |
|---|---|---|---|---|
| Verzweigtes synthetisches Kohlenstofföl, z.B. Poly-1-decen | 99 - 80 | 10 - 89 | 98 - 60 | 10 - 88 |
| Thixotropiermittel | 1 - 20 | 1 - 20 | 1 - 20 | 1 - 20 |
| organisches Verdickungsmittel | - | - | 1 - 20 | 1 - 20 |
| Mineralöl | - | 89 - 10 | - | 88 - 10 |

Die Erfindung betrifft auch die Verwendung des thixotropen Gels zur Herstellung von Lichtwellenleiterkabeln. Das erfindungsgemäße Gel eignet sich sowohl als Adernfüllmasse als auch als Seelenfüllmasse.

Im folgenden wird die Herstellung des erfindungsgemäßen thixotropen Gels anhand eines detailliert beschriebenen Ausführungsbeispiels erläutert. In Vergleichsbeispielen werden Materialien nach dem Stand der Technik gegenübergestellt.

Die in den Beispielen angegebene Konuspenetration ist nach DIN ISO 2137 bestimmt worden. Der Flammpunkt der Gele wurde gemäß DIN ISO 2592 ermittelt.

## Beispiel 1

Eine erfindungsgemäße Aderfüllmasse zum universellen Einsatz wurde aus den folgenden Bestandteilen hergestellt:

92,5 Gewichtsteile eines synthetischen Kohlenwasserstofföls reich an Poly-1-decen mit einer kinematischen Viskosität bei 40°C von 62 mm²/sec und eine Dichte bei 15°C von 0,833 g/cm³.

7,5 Gewichtsteile einer silanmodifizierten pyrogenen Kieselsäure mit einer Oberfläche nach B.E.T. oberhalb 150 m²/g.

Das Öls wurde in einem Mischkessel vorgelegt und auf etwa 80°C erhitzt. Unter starkem Rühren wurde die Kieselsäure portionsweise zugegeben. Anschließend wurde etwa 1 Stunde lang mit hoher Rührgeschwindigkeit (800 bis 1000 UpM) gemischt. Danach wurde 30 Minuten lang bei mittlerer Rührgeschwindigkeit (400 UpM) unter leichtem Vakuum entgast. Anschließend wurde weitere 30 Minuten lang unter erhöhtem Vakuum (ca. 200 mbar) nachevakuiert.

Die Eigenschaften des so erhaltenen thixotropen Gels sind in der Tabelle 2 angegeben.

## Vergleichsbeispiel 2

Zur Herstellung einer Aderfüllmasse für Gebiete mit kaltem Klima gemäß Stand der Technik wurden 92,5 Gewichtsteile eines Mineralöls mit einer kinematischen Viskosität bei 40°C von 13 mm²/sec und einer Dichte bei 15°C von 0,850 g/cm³ verwendet. Im übrigen wurde nach der Vorschrift des Beispiels 1 gearbeitet. Die Eigenschaften des Gels sind in der Tabelle 2 gezeigt.

## Vergleichsbeispiel 3

Zur Herstellung einer Aderfüllmasse gemäß Stand der Technik für Gebiete mit mittel-europäischem Klima wurde ein Mineralöl mit einer kinematischen Viskosität bei 40°C von 100 mm²/sec und einer Dichte bei 15°C von 0,885 g/cm³ verwendet. Im übrigen wurde gemäß der Vorschrift des Beispiels 1 gearbeitet. Die Eigenschaften des so erhaltenen Gels sind in der Tabelle 2 gezeigt.

4

EP 0 371 374 A1

Tabelle 2

|  | Beispiel 1 | Vergleichsbeispiel 2 | Vergleichsbeispiel 3 |
|---|---|---|---|
| Flammpunkt (°C) | 240 | 155 | 250 |
| Abdampfverlust bei 150°C/24 Std. (Gew.%) | 1,5 | 30 | 0,5 |
| Konuspenetration (1/10 mm) |  |  |  |
| bei 25°C | 360 | 360 | 360 |
| bei -45°C | 255 | 200 | 20 |
| bei -60°C | 188 | 145 | 5 |

Wie die Tabelle 2 zeigt, ist das Gel des Vergleichsbeispiels 3 bei tiefen Temperaturen als Aderfüllmasse für Lichtwellenleiterkabel unbrauchbar. Das Gel des Vergleichsbeispiels 2 läßt sich nur unter Schwierigkeiten bei der Herstellung eines Lichtwellenleiterkabels verarbeiten, da sein Flammpunkt unterhalb der üblichen Verarbeitungstemperatur liegt und es bei erhöhter Temperatur sehr flüchtig ist. Demgegenüber ist das erfindungsgemäße Gel in jeder Hinsicht befriedigend. Es kann problemlos bei erhöhter Temperatur, beispielsweise bei 200°C verarbeitet werden. Auch bei Temperaturen bis herab zu -60°C verfestigt es sich nicht.

**Ansprüche**

1. Thixotropes Gel, bestehend aus
a) einem synthetischen Kohlenwasserstofföl,
b) pyrogener Kieselsäure, hydrophobierter pyrogener Kieselsäure, hydrophobierter gefällter Kieselsäure, hydrophobiertem Ton und/oder Metallseife als Thixotropiermittel sowie
c) gegebenenfalls organischem Verdickungsmittel, Mineralöl und/oder weiteren Zusatzstoffen,
**dadurch gekennzeichnet,** daß das synthetische Kohlenwasserstofföl aus einem hydrierten Polyalkylen besteht, das ein Polymeres von 1-Octen, 1-Nonen, 1-Decen, 1-Undecen und/oder 1-Dodecen oder eine Mischung dieser Polymere ist.

2. Gel nach Anspruch 1, **dadurch gekennzeichnet,** daß das hydrierte Polyalkylen reich an 1-Decen ist oder daraus besteht.

3. Gel nach Anpsruch 1 oder 2, **dadurch gekennzeichnet,** daß das hydrierte Polyalkylen bei 20°C eine dynamische Viskosität von 5 bis $10^4$ mPa.s hat.

4. Verwendung des Gels nach einem der vorhergehenden Ansprüche als Aderfüllmasse und/oder Seelenfüllmasse für die Herstellung von Lichtleiterkabeln.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 607 311 (BP CHIMIE SA) <br> * Seite 6, Zeilen 17-35; Ansprüche 1,10 * <br> --- | 1-4 | H 01 B 3/22 <br> G 02 B 6/44 <br> C 08 K 3/36 |
| Y | EP-A-0 004 425 (UNIROYAL INC.) <br> * Seite 1, Zeile 17 - Seite 2, Zeile 3; Beispiele 1,4 * <br> --- | 1,2 | |
| Y | EP-A-0 029 198 (SIEMENS AG) <br> * Ansprüche; Tabel 1 * <br> ----- | 1,2 | |

RECHERCHIERTE
SACHGEBIETE (Int. Cl.5)

G 02 B
C 08 L
C 08 K
H 01 B

Der vorliegende Recherchenbericht wurde für alle Patentansprüche erstellt

| Recherchenort | Abschlußdatum der Recherche | Prüfer |
|---|---|---|
| DEN HAAG | 01-03-1990 | WILSON A.J.D. |